# EUROPEAN PATENT SPECIFICATION

(11) **EP 1 049 901 B1**
(45) Date of publication and mention of the grant of the patent: **14.11.2001**
(21) Application number: 98962709.6
(22) Date of filing: 24.12.1998
(51) Int. Cl.: F24J 2/04, F28D 20/00, E01C 11/26, E01C 23/04

(54) **METHOD FOR INSTALLING AN ENERGY CONVERSION APPARATUS IN A PAVING**
VERFAHREN ZUR ANLEGUNG EINER ENERGIEUMWANDLUNGSVORRICHTUNG IN EINER STRASSENDECKE
PROCEDE D'INSTALLATION D'UN APPAREIL DE CONVERSION D'ENERGIE DANS UN REVETEMENT ROUTIER

(30) Priority: 24.12.1997 NL 1007903
(43) Date of publication of application: 08.11.2000
(73) Proprietor: Wth Vloer Verwarming B.V., 3300 AL Dordrecht (NL); Van Rij, Hans, 3132 XR Vlaardingen (NL)
(72) Inventor: VAN RIJ, Hans, NL-3132 XR Vlaardingen (NL)
(74) Representative: Bartelds, Erik
(86) International application number: NL9800737
(87) International publication number: WO9934155

(56) References cited:
- EP-A- 0 054 126
- EP-A- 0 241 803
- EP-A- 0 292 337
- EP-A- 0 322 489
- EP-A- 0 436 523
- EP-A- 0 488 305
- DE-A- 2 064 652
- DE-A- 2 117 282
- DE-A- 3 101 913
- DE-A- 3 232 268
- DE-A- 3 407 927
- DE-A- 4 341 858
- FR-A- 2 097 078
- US-A- 4 037 652

## Description

The invention relates to a method for forming an energy converting device in a pavement by embedding at a desired location in a layer of paving material at least one conduit for a heat exchanger comprising heat transport medium and connecting the heat exchanger to a storage location or a location of use. Such a method is generally known, for instance from US-A-4 037 652 or from EP-A-0 322 489.

US-A-4 037 652 specification describes how a road surface, for instance an asphalted drive, can be used as solar collector. According to this older publication a conduit is embedded for this purpose winding in loops into the asphalt layer and water is guided from a tank through the thus formed heat exchanger. The asphalt is herein heated by solar radiation and relinquishes the thus generated heat to the water flowing through the conduit. This heat is then used in a heating system or tap water supply of for instance a dwelling.

EP-A-0 322 489 discloses how water is pumped in summer from an underground storage through conduits in a road surface and, after being heated there, is pumped through to another storage location. In winter the warm water stored there is then pumped through the conduits again in order to heat the road surface and prevent freezing thereof.

The system as described in said US patent has the advantage relative to conventional systems, wherein solar collectors arranged on the roof of a building are utilized, that the available collector surface is practically unlimited. This in contrast to the situation with placing on the roof where the surface for arranging solar collectors is relatively limited, also in view of the fact that for optimal operation these solar collectors must be in a predetermined position relative to the sun. In addition, the use of the system as described in the European patent publication provides the further advantage that use of the road network is thereby guaranteed in bad weather conditions, while in addition the relinquishing of heat by the road surface has a cooling effect in the summer, whereby plastic deformation thereof can be prevented.

Said patent specifications contain no indication whatever concerning the manner in which the heat exchanger is arranged in the road surface. The invention now has for its object to provide a method with which a heat exchanger can be embedded in a pavement in simple and rapid manner, which method is suitable for performing on industrial scale at low cost. It is the objective herewith to make arranging of heat exchangers in a pavement economically viable.

According to the invention this is achieved in a method of the above described type in that the or each conduit of the heat exchanger is formed into a desired shape at a remote location by connection thereof to a carrier, the thus pre-formed conduit is embedded in the paving material, and the carries is removed from the or each conduit after embedding thereof. The use of a pre-formed heat exchanger which can be easily arranged in the paving material at the desired location makes it possible to work rapidly at this location. This is important because this location will generally be closed for traffic during the work, which can result in great inconvenience. In addition, by pre-forming the heat exchanger on industrial scale at a remote location, generally a workshop or factory, it can be produced rapidly and simply.

A method which is quick and easy to perform is herein obtained when the carrier is removed from the or each conduit by melting connecting elements arranged therebetween. The carrier is thus automatically released from the conduit when the heat exchanger is embedded in the paving material when it is still plastic, and therefore hot.

The or each conduit can be manufactured from a resiliently flexible material. Despite the use of a resilient material, which offers great advantages for the further processing, a pre-formed heat exchanger can be applied by use of the carrier.

The carrier is herein advantageously manufactured from a reinforcing material. The reinforcement necessary in many applications can thus in fact fulfill a dual function.

The layer of paving material is preferably arranged on a subgrade and the heat exchanger is subsequently pressed into the paving material. Such a method of arranging the heat exchanger can be readily applied mechanically and on industrial scale. In order to prevent deformation the heat exchanger is herein advantageously held internally under pressure during pressing thereof into the paving material, for instance in that a cooling medium under pressure flows through the heat exchanger. Damage to the structure of the heat exchanger is hereby also avoided.

In order to enable pressing of the heat exchanger therein with only little effort, the layer of paving material is preferably relatively open and comprises for instance at least 5 percent by volume of open space.

In order to prevent the conduit protruding when the paving material is granular, the thickness of the layer of paving material is at least equal to the sum of the largest grain size and the diameter of the conduit.

Another cover layer of a paving material can further be arranged over the layer of paving material with the heat exchanger pressed therein. In order to obtain an optimal construction, the paving material with the heat exchanger pressed therein is advantageously provided herein with a relatively thin adhesive layer prior to applying of the cover layer.

According to a variant of the method according to the invention it is also possible, for instance when the device has to be arranged on an existing pavement, for the heat exchanger to be placed on a subgrade and the layer of paving material to be then arranged thereover. In this case an adhesive layer is preferably applied to the subgrade after placing of the heat exchanger in order to form a firm connection.

To prevent damage in this case to the already placed heat exchanger by the heavy machines used, at least one travel track is advantageously formed on the subgrade with the heat exchanger placed thereon prior to the arranging of the layer of paving material.

So as to obtain a maximum heat exchanging surface between the conduit and the paving material, the or each conduit is preferably embedded in loops into the layer of paving material. Bearing in mind compression of the conduits and the drainage through the paving material, the loops herein preferably enclose an acute angle with a longitudinal axis of the pavement, for instance an angle of a maximum of 85°.

The invention further relates to an installation for generating and storing renewable energy, comprising an energy converting device including a heat exchanger embedded in a layer of material of the pavement with at least one conduit for a heat transport medium in addition to at least one storage location connected thereto via one or more transporting lines. According to another aspect of the invention the storage location in such an energy generating installation is formed by a part of the ground which is separated by walls extending to below the groundwater level, at least one heat exchanger is arranged in the separated part of the ground and the transporting line is connected to the heat exchanger. Such a storage location can be formed simply and at low cost and depends little or not at all on the local soil conditions.

The heat exchanger is herein preferably arranged along at least the part of the walls located below the groundwater level and an insulating layer is arranged in or along the walls. At least one controllable valve, for instance a thermostatically controllable valve, can herein be arranged in the transporting lines between the energy converting device and the storage location.

The invention will now be elucidated on the basis of a number of embodiments, wherein reference is made to the annexed drawing, in which:
figure 1 shows a partly broken-away perspective view of a part of an asphalt road having therein a heat exchanger for converting radiation heat into transportable heat,
figure 2 shows a cross-section through a road with a heat exchanger arranged therein, in which a storage location and a location of use are also shown,
figure 3 is a detail on enlarged scale of the cross-section of figure 2,
figure 4 shows an alternative application of a location for storing heat,
figures 5A to E show the different steps for forming an energy converting device according to the invention,
figures 6A and B show the orientation of the loops of the heat exchanger in the case of a relatively compact, respectively a relatively porous top layer,
figure 7 shows schematically the forming of the device according to the invention when a very porous top layer is chosen,
figure 8 shows a schematic side view of an apparatus for arranging a reinforcing layer and a top layer in one operational cycle,
figures 9A to F show the steps of forming an energy converting device in a pavement wherein no reinforcement is used,
figure 10 shows schematically the structure of the variant of the energy converting device as obtained by the process shown in fig. 8, and
figure 11 shows schematically the relation between the angle of the loops and the width of a roller.

An installation 1 for generating renewable energy comprises a device for converting, in the proximity of the surface of the earth 21, heat generated by solar radiation on a pavement 43 into a form suitable for transport and/or storage. This converting device is formed by a heat exchanger 2 arranged in pavement 43 in the form of a number of conduits 44 through which flows a heat transport medium. In the shown embodiment the pavement 43 herein forms an asphalt road and conduit 44 is embedded in the asphalt.

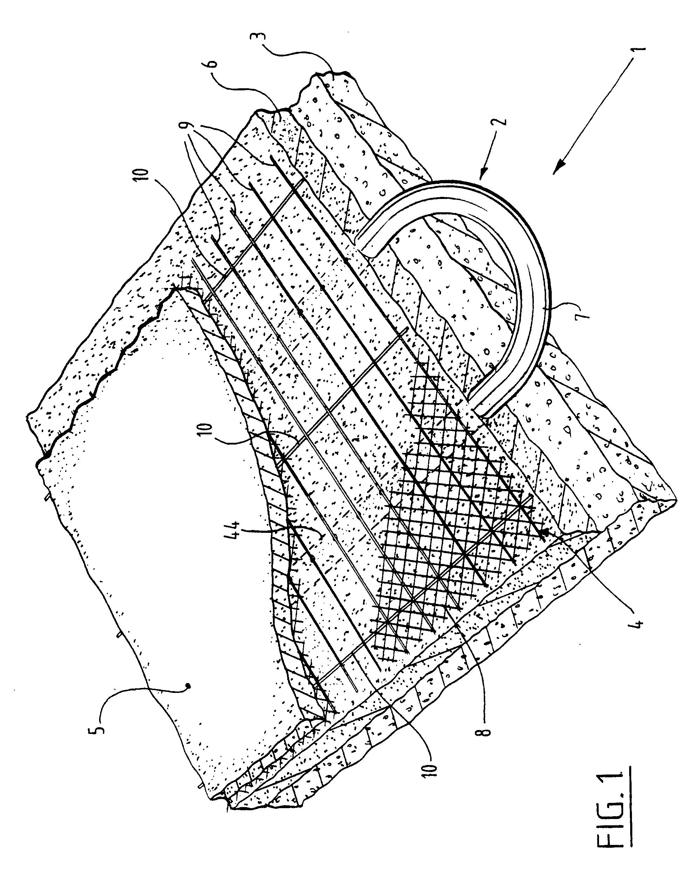

This asphalt road is for instance formed by a subbase 3, an embedding layer 6 arranged thereon and a cover layer or top layer 5 (fig. 1). In order to strengthen the asphalt layers a reinforcing layer 4 is arranged which is formed by a number of longitudinal stiffeners 9, a number of transverse stiffeners 10 and a grid 8 filling a space between the stiffeners. Conduit 44 of heat exchanger 2, which can be laid in parallel loops 7, is connected to reinforcement 4. This has the advantage that arranging of heat exchanger 2 in the road surface is greatly simplified in this manner, as will be further elucidated hereinbelow, while in addition the heat generated in the upper asphalt layer 5 as a result of the solar radiation can be conducted rapidly and with little loss through reinforcement 4 to conduits 44, at least when reinforcement 4 is manufactured from a good heat-conducting material. As stated, the conduit 44 itself is arranged in parallel loops 7, so that a relatively large heat-exchanging surface results. Depending on the dimensions of the conduit, the wall thickness thereof and the material used, the interspacing between the loops can vary from one to several decimeters. When use is made of a conventional conduit of flexible and conductive plastic, such as is used particularly in floor heating systems, good results are obtained with an interspacing between the loops of about 15 cm. Conduit 44 can otherwise be arranged above as well as below reinforcing layer 4.

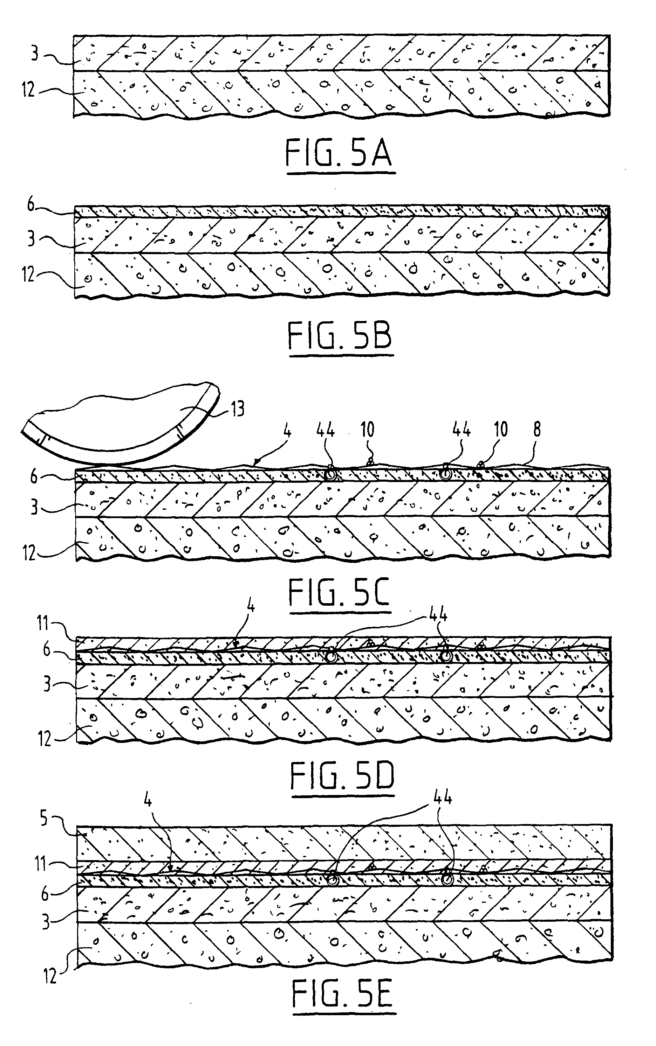

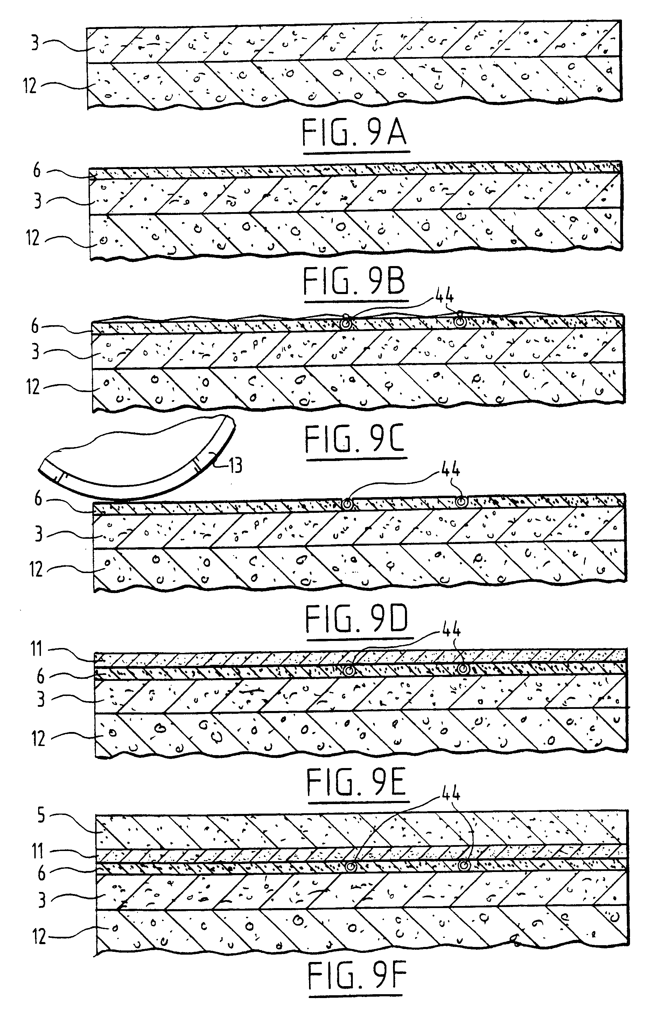

In order to lay an energy converting device as described above, a subbase 3, in the shown embodiment a layer of so-called non-porous asphalt, can first be arranged on a subgrade 12 (figures 5A, 9A). In accordance with a first variant of the method according to the invention an embedding layer 6 is then arranged on this subbase 3 (figures 5B, 9B) into which conduits 44 of the heat exchanger are subsequently pressed. In order to enable pressing of conduits 44 into embedding layer 6 without exerting excessively great forces thereon, and therefore without the risk of deformation of conduits 44, embedding layer 6 must be relatively easily deformable. This layer has of course also to be sufficiently robust to be able to carry traffic.

Embedding layer 6 is therefore preferably manufactured of a material which can be applied in plastic form and later hardens and into which conduits 44 can be pressed as long as it is still in the plastic condition. It has been found in addition that preferably non-broken material should be used for embedding layer 6 in order to limit as far as possible puncturing of the conduits. In preference the material of which embedding layer 6 is manufactured further has sufficient open space to yield readily when conduits 44 are pressed therein. An added advantage of open spaces in the material of embedding layer 6 is that the insulation value of this layer is hereby increased, whereby less heat will be relinquished to the subgrade and the efficiency of the heat exchanger is thus improved.

It has been found in practice that a material with at least 5 percent by volume of open space is well satisfactory. A suitable material is for instance a synthetic resin modified
asphalt type which is marketed by the company Ooms Avenhorn Holding B.V. in Scharwoude (NL). So-called ZOAB (very porous asphalt), which has about 20% by volume of open space, would however also be suitable as embedding material.

The thickness of embedding layer 6 is subject to different factors, including the distribution of the grain size in the material of this layer (in the case of a granular material such as asphalt) and the diameter of the conduits 44 to be accommodated therein. In order to prevent conduits 44 protruding above the embedding layer after compacting or rolling thereof, the thickness of the layer after compacting must be at least equal to the size of the largest grains in the material increased by the diameter of conduits 44. A conduit 44 can thus as it were lie locally "on top of" the largest grain without protruding outside embedding layer 6.

Conduits 44 can be manufactured from a relatively stiff, form-retaining material which can be formed into the desired meandrous shape by plastic deformation. In this case the thus pre-formed conduits 44 can be pressed or rolled without problem into embedding layer 6. When on the other hand conduits 44 are manufactured from a resiliently flexible material, for instance a soft plastic, they can be formed into the desired shape by bending and subsequent fixing to a carrier, whereby the shape is fixed. This carrier must then of course be in any case form- retaining in the plane of the bend.

The reinforcement 4 can advantageously be used as carrier, which reinforcement can then therefore fulfill a dual function. All usual materials can herein be considered suitable for reinforcement 4, such as a metal grid as shown in fig. 1, but also a sheet of a fibre-reinforced composite material, such as for instance a glass fibre/bitumen composite. Conduits 44 and reinforcement 4, which can be formed and prepared for installation at a remote location, for instance in a factory, can then simply be placed integrally on embedding layer 6 and pressed therein at the final location of use. The pre-formed assembly of the reinforcement with conduits 44 thereon can for instance be supplied in the form of very large slabs, the maximum dimensions of which are substantially determined by the necessity of transporting them by road, while it is otherwise also possible to roll up the reinforcement with conduits 44 thereon and simply unroll them over embedding layer 6 at the construction site.

When the assembly of reinforcement and heat exchanger 2 is placed on embedding layer 6, in the shown embodiment with heat exchanger 6 on the underside, the whole is pressed down by means of a roller 13 (figures 5C, 9D). In order to prevent conduits 44 herein being deformed or even damaged, they are preferably placed under pressure during rolling. Because, as stated, embedding layer 6 must still be deformable during arranging of conduits 44, it will generally be processed hot, i.e. at temperatures in the order of 110-160■C. When conduits 44 are then manufactured from an easily processed plastic material, they must be cooled to prevent damage, in particular degradation of the outer diffusion layer. A coolant is therefore preferably pumped under pressure through conduits 44 during the rolling thereof in embedding layer 6. Conduits 44 are thus simultaneously cooled and protected against compression by roller 13.

A tacky adhesive layer 11 can then be spread over the reinforcement 4 and heat exchanger 2 thus rolled into embedding layer 6 (fig. 5D, 9E), whereafter the cover layers or so-called top layers are arranged (fig. 5E, 9F). These top layers 5, generally of asphalt, then form the actual solar collector. Adhesive layer 11 can for instance be formed by a polymer material but may also be a bitumen material or an emulsion of bitumen and water. The quantity of material in the adhesive layer is chosen such that possible empty spaces between conduits 44 and the surrounding embedding layer 6 are filled as well as possible, but may not be too large since otherwise the adhesive layer 11 would become too thick and could fail due to shear in the case of heavy load. In practice a quantity of adhesive material of 0.5 to 3 kg/m3 has been found to serve the purpose.

Before top layer 5 can be arranged on adhesive layer, this latter is first covered with an anchoring layer of for instance gravel or a broken material, which also serves to make working on the tacky adhesive layer 11 possible.

When no reinforcement is necessary, use is advantageously still made of a carrier for fixing of conduits 44 after bending thereof into the desired shape. In that case however, the carrier can be released again and removed after embedding of conduits 44 in layer 6 (fig. 9C). For this purpose conduits 44 can be connected to the carrier by means of easily removable connecting elements. Use is then advantageously made of connecting elements which melt at the usual processing temperatures of the material of embedding layer 6. The advantages of a pre-formed heat exchanger are thus still obtained even without reinforcement, in particular simple production on industrial scale and the rapid and simple installation at the final location of use.

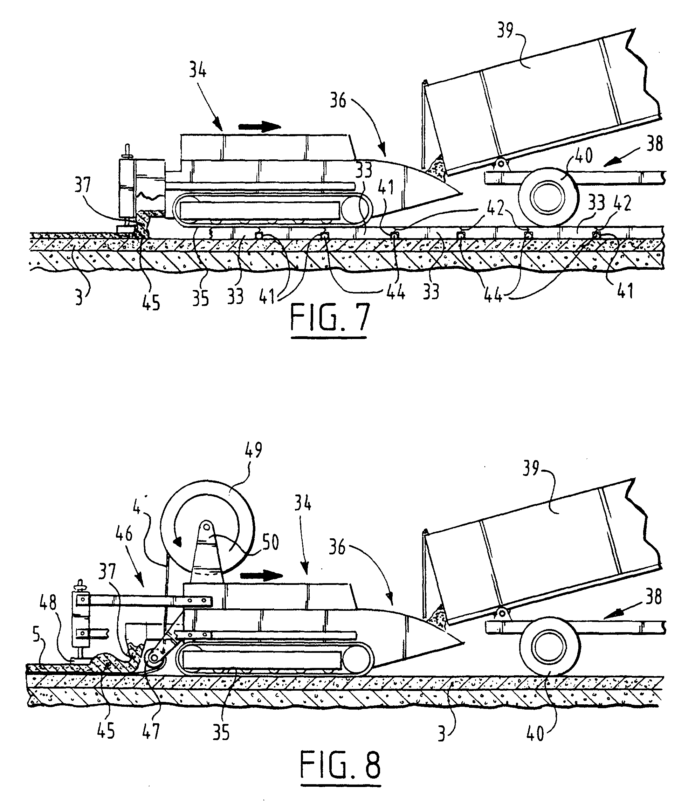

When top layers 5 are manufactured from non-porous asphalt, the loops 7 in which conduit 44 is laid will extend in the travel direction (fig. 6A), whereby the load resulting from passing vehicles is distributed as well as possible. When, conversely, top layers 5 are manufactured from very porous asphalt (ZOAB), which is extremely porous, loops 7 will run at an angle to the direction of travel (fig. 6B) so as not to obstruct the drainage through the open structure of the top layers.

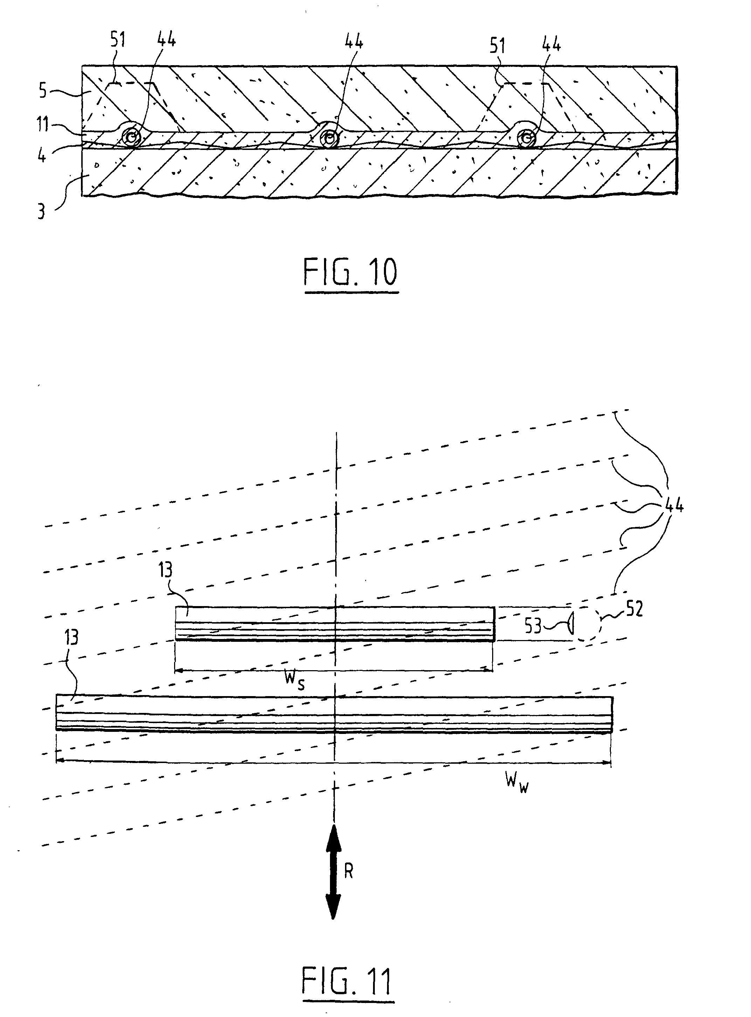

Loops 7 will herein preferably not be laid exactly transversely of the direction of travel, since problems then occur during rolling of conduit 44 into embedding layer 6. In that case each loop 7 would run roughly parallel to the axis of the roller 13, whereby the weight of roller 13 at the moment of passing over a loop 7 is distributed over the entire loop. The pressing force exerted on loop 7 is hereby insufficient, while in addition the roller 13 will as it were begin to "bounce". By laying loops 7 at an angle relative to the direction of travel the roller 13 is in contact at any moment with only one point of loop 7, whereby a greater pressing force can thus be exerted. The minimum angle between conduits 44 and the roller axis at which roller 13 is still prevented from coming to rest on a single loop 7 is of course dependent on the width of roller 13 and the dimensions in the rolling direction of the contact area between the roller and embedding layer 6 (fig. 11). In the case of a very wide roller of 1.90 m and a contact length of about 10 cm, this angle amounts to about 3°, whereas for a regular roller with a width of 1.10 m the angle amounts to about 5°. A minimum angle of about 10° leads in practice to good results under all conditions.

It is also possible to arrange the solar collector on an existing pavement. In accordance with another variant of the method according to the invention the pre-formed conduit 44 can in this case be placed on subbase 3, whether or not in combination with a reinforcement 4, whereafter one or more top layers can be arranged thereover. When a reinforcement is used, this is then placed on the underside between subbase 3 and conduit 44. The conduit 44 and the optional reinforcement 4 can in this case be fixed onto the subbase by means of an adhesive layer, for which the same material can be used as for adhesive layer 11 between embedding layer 6 and top layer 5 in the above discussed embodiment.

In order to prevent damage to the already placed conduit 44 by the heavy equipment used, use can be made of cover elements 33 (fig. 7). These cover elements 33, which can take the form of relatively shorts beams in which recesses 41 are arranged, are generally laid in two parallel rows transversely over conduits 44 so that a track is formed for the asphalting machine 34 and the possibly used truck 38 with which the asphalting machine 34 is provided with fresh asphalt. Conduits 44 are thus not damaged by the wheels 40 of the truck and the caterpillar tracks 35 of asphalting machine 34.

Asphalting machine 34 is generally provided herein with a supply container 36 for asphalt which is periodically refilled from a tipping body 39 of truck 38. The asphalt is finally carried from this supply container 36 onto the subgrade via an outlet slot 37. Since this outlet slot 37 is situated some distance behind the caterpillars 35 of asphalting machine 34 as viewed in the direction of travel, there is sufficient opportunity after caterpillar 35 has passed to remove one cover element 33 in each case before it is buried underneath a layer of asphalt. The cover elements 33 taken away behind asphalting machine 34 can herein be re-placed at the front for the approaching truck 38. For connection between cover elements 33 they are provided for instance with a spring 42. A heat exchanger 2 can thus be arranged in simple manner and without risk of damage in a layer of asphalt, for instance a road surface. The asphalting machine 34 can further be provi ded on the rear with a sprayer boom, whereby an adhesive can be sprayed onto subbase 3 and heat exchanger 2 before pouring of the asphalt.

Instead of using separate cover elements 33 it is even simpler to form an outlet opening (not shown here) in front of each caterpillar track 35 on the front side of asphalting machine 34, with which opening two travel tracks of asphalt can be formed over which asphalting machine 34 can then be displaced. These travel tracks are eventually absorbed into the asphalt layer poured onto subbase 3 and do not therefore have to be removed separately. This method of protecting conduits 44 can therefore be performed simply and rapidly.

In this variant of the method according to the invention the conduit 44 will also have to be held under pressure during rollng. In addition, conduit 44 must of course be cooled during pouring of the hot asphalt. A coolant will here also have to be pumped through conduit 44.

Arranging the carrier or reinforcement 4 with the conduits 44 thereon forms a separate processing step in the embodiments shown up to this point. Particularly when the energy generating device has the function of a road or for instance a runway at an airport, construction thereof in the shortest possible time is desirable so as to hinder road or air traffic as little as possible. Use can be made for this purpose of a modified asphalting machine 34 (fig. 8) which is provided with means 46 placed in front of outlet slot 37 as seen in the operational direction for arranging on subbase 3 the carrier or reinforcement 4 with the heat exchanger 2 thereon.

These arranging means 46 are formed by a deflecting roller 47 whereby the carrier or reinforcement 4, which is fed from above, is bent and placed in flat manner on subbase 3.
Reinforcement 4 with heat exchanger 2 is thereafter covered by the fresh asphalt 45 which runs out of outlet slot 37 and is thereafter spread by spreading means, in practice designated as a finishing beam 48. During use of this modified asphalting machine 34 the reinforcement 4 is preferably supplied in the form of a roll 49. This supply roll 49 can then be suspended in a holder, for instance a trestle 50 arranged on the asphalting machine. Both a reinforcing layer and an asphalt layer can thus be arranged in one operational cycle with this asphalting machine 34. It will otherwise be apparent that this modified asphalting device 34 can advantageously also be applied for normal asphalting operations, wherein no heat exchanger but only a reinforcing layer or other type of intermediate layer has to be arranged under top layer 5.

After being embedded in pavement 43, the or each conduit 44 of heat exchanger 2 is further connected to a transporting line through which the heat transport medium, after absorbing the radiant heat from pavement 43, can be discharged to a location of use 15 or a storage location 14. The heat transport medium will in practice generally be transported to a storage location 14, since the radiant heat after all becomes available mainly in periods of high temperatures when the requirement for such heat to heat buildings and the like is therefore also low.

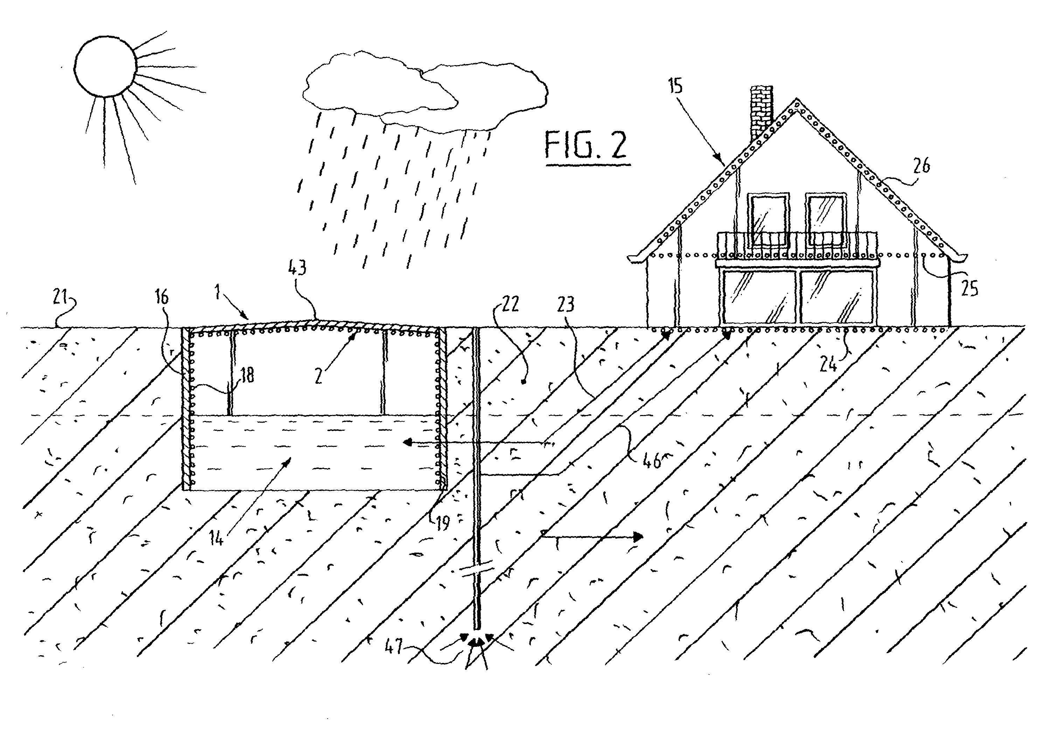

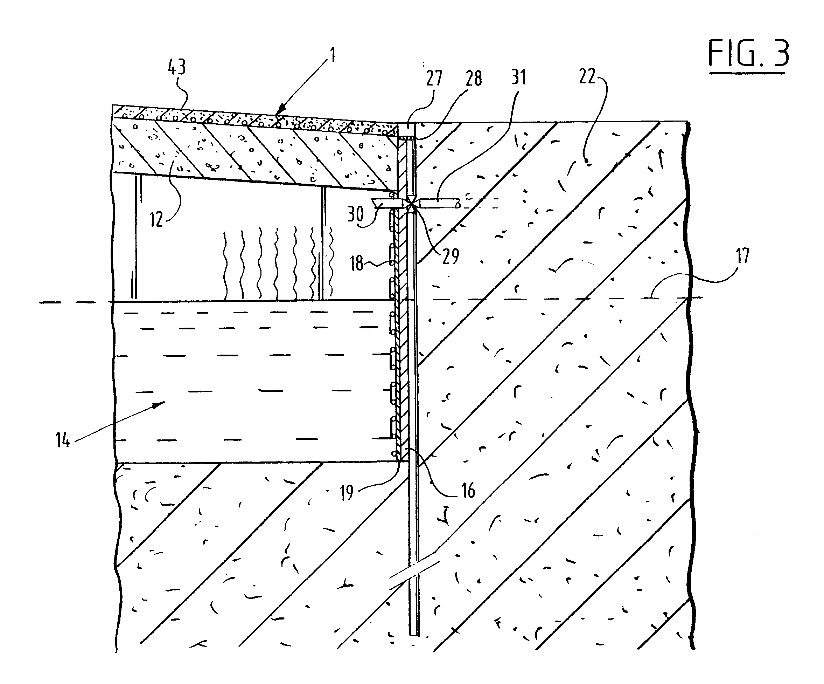

According to yet another aspect of the present invention, storage location 14 can herein be formed by a part of the ground 22 which is separated by walls 16 extending downward some distance into the ground (fig. 2). Walls 16 extend to below the groundwater level 17, whereby a part of the groundwater is thus confined in the space bound by walls 16. This groundwater is then used to store the heat. For this purpose a heat exchanger 18 is arranged along that part of walls 16 situated below groundwater level 17. The heat transport medium is guided through this heat exchanger 18 and thus relinquishes its heat to the groundwater situated between walls 16. Since this groundwater thus becomes warmer than the groundwater outside walls 16, it will tend to rise as indicated by arrows W (fig. 3), so that it will in any case remain confined between walls 16 and will not flow away thereunder. In order to retain the heat in the groundwater the walls 16 are further provided in the shown embodiment with an insulation layer 19. Instead of arranging a separate insulation layer on the walls, an insulating material such as for instance PUR-foam can also be integrated. Because the heated groundwater rises inside walls 16, colder groundwater outside these walls is drawn in, which is in turn heated and rises, so that the entire storage location bound by walls 16 is eventually filled with relatively warm groundwater.

When the ambient temperatures fall this warm groundwater can be used to heat for instance a building 15. For this purpose the groundwater can be pumped up and be fed via a conduit 23 to a conduit such as 24, 25, 26 in the building for heating 15. It is also possible to guide the heat transport medium which flows through heat exchanger 18, and is therefore heated by the groundwater, to the building 15. In order to heat building 15 the heat transport medium is finally carried herein through conduits 24, 25 in the floor of respectively the ground floor and the first floor, since the heat radiated by the heat transport medium will anyway rise. When building 15 must be cooled, a cold medium can be extracted from a cold source 47 deep in the ground 22 and fed via a conduit 46 to building 15, wherein this cold medium will then be transported through conduits 25 and 26 in order to cool the room areas in building 15 by cold radiation from above.

The heat present in storage location 14 can advantageously also be used to heat road surface 43 in periods of low outside temperatures so as to prevent freezing thereof. To this end the direction of flow of the heat transport medium can simply be reversed and the heat transport medium can be guided from heat exchanger 18 to heat exchanger 2 and there relinquish heat.

It is not only the heat transport medium which can relinquish heat to the groundwater at storage location 14. Agutter 27 will generally be present adjacently of road surface 43 for draining rainwater falling onto road surface 43. This rainwater, which is drained over (and, in the case of a road surface with a very porous top layer such as ZOAB, also through) the road surface sidewards to gutter 27, can also be stored in storage location 14 when the temperature thereof is high enough. For this purpose the collected water first passes through a filter 28 and subsequently arrives at a thermostatically controlled three-way valve 29 via an oil separator, whereby the water, depending on its temperature, can be carried via a drainage pipe 30 to storage location 14 or via a drainage pipe 31 to the part of the ground 22 lying outside walls 16.

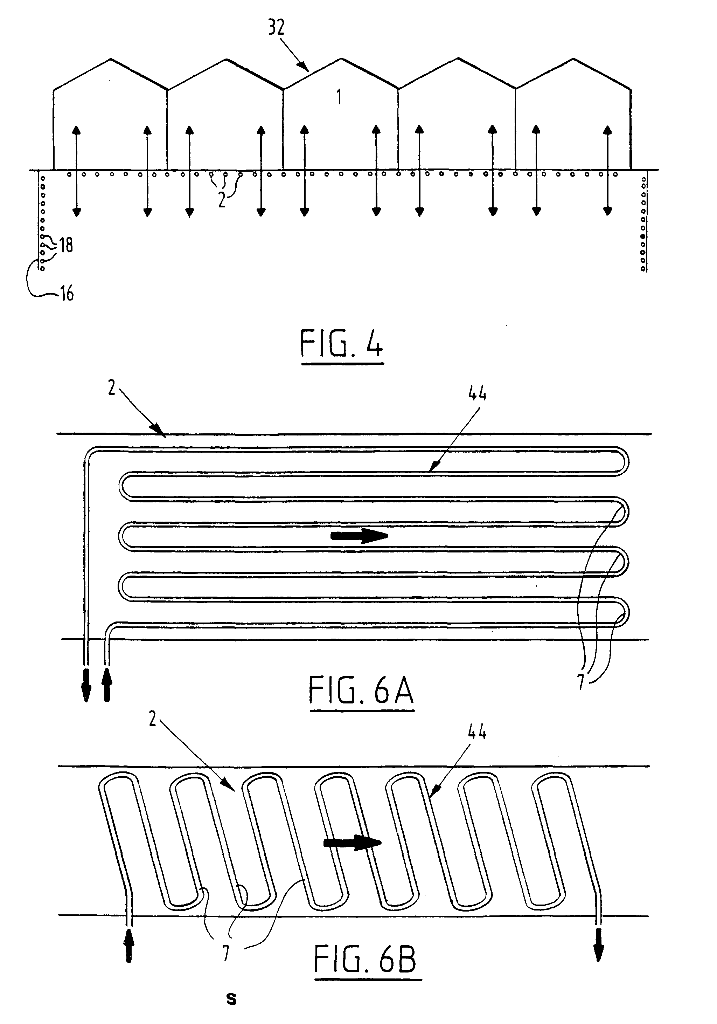

The storage location is otherwise not limited to storage of heat obtained by means of converting radiation heat on the surface. Heat which has been obtained in other ways, for instance residual heat released during energy production or waste incineration could in principle be stored in the groundwater in the manner described above. Another possible application is shown in figure 4, where the heat in a horticultural greenhouse 32 resulting from external solar radiation on the roof of the greenhouse is transported away via heat exchangers 2 arranged in the floor of the greenhouse to a storage location 14, which can for instance be situated under the greenhouse. This heat can, if necessary, then be fed back again into the greenhouse. Paved surfaces possibly present around the greenhouse, such as for instance a car park, can also be provided with heat exchangers connected to storage location 14 so that greenhouse 32 can be heated thereby.

The above described method according to the invention enables placing of a large area of solar collectors in a pavement in relatively simple manner and at great speed. Because surfaces which also fulfill another useful function, i.e. as road surface, are thus used as solar collectors, no space is lost by placing these solar collectors. An added advantage of placing the heat exchanger in asphalted surfaces is that large fluctuations of temperature in the asphalted surface are hereby prevented because the radiant heat is removed therefrom and can be fed back from the storage location in the case of lower temperatures. Damage to the asphalted surface as a result of thermal stresses can thus be reduced, which results in lower maintenance costs in the case the asphalted surface forms a road.

Although the invention is described above with reference to an embodiment, it will be apparent to the skilled person that many variations are possible within the scope of the invention. A plurality of layers of heat exchangers could thus be accommodated in the paved surface, for instance simply by incorporating a new layer of heat exchanger conduits during arranging of a new layer of asphalt. In addition, another top layer could be applied as paving material instead of asphalt,such as for instance a concrete road surface. In addition, forms of storage other than the storage by means of groundwater as described above are also possible, while, as stated, the storage by means of groundwater could also be used for heat obtained by other means. Finally, the invention is described with reference to a horizontal collector surface, while it will be apparent here that otherwise adapted surfaces, for instance side walls of large buildings and the like, could also be used as collector according to the invention.

## Claims

1. Method for forming an energy converting device in a pavement by embedding at a desired location in a layer of paving material (6;43) at least one conduit (44) for a heat exchanger comprising heat transport medium and connecting the heat exchanger (2) to a storage location (14) or a location, of use (15), **characterized in that** the or each conduit (44) of the heat exchanger is formed into a desired shape at a remote location by connection thereof to a carrier, the thus pre-formed conduit (44) is embedded in the paving material (6;43), and after embedding of the or each conduit the carrier is removed therefrom.

2. Method as claimed in claim 1, **characterized in that** the carrier (4) is removed from the or each conduit (44) by melting connecting elements arranged therebetween.

3. Method as claimed in claim 1 or 2, **characterized in that** the or each conduit (44) is manufactured from a resiliently flexible material.

4. Method as claimed in any of the preceding claims, **characterized in that** the carrier (4) is manufactured from a reinforcing material.

5. Method as claimed in any of the preceding claims, **characterized in that** the layer of paving material (6;43) is arranged on a subgrade (3) and the heat exchanger (2) is subsequently pressed into the paving material.

6. Method as claimed in claim 5, **characterized in that** the heat exchanger (2) is held internally under pressure during pressing thereof into the paving material (6;43).

7. Method as claimed in claim 6, **characterized in that** a cooling medium under pressure flows through the heat exchanger (2) during pressing thereof into the paving material (6;43).

8. Method as claimed in any of the claims 5-7, **characterized in that** the layer of paving material (6;43) is relatively open.

9. Method as claimed in claim 8, **characterized in that** the layer of paving material (6;43) comprises at least 5 percent by volume of open space.

10. Method as claimed in any of the claims 5-9, **characterized in that** the paving material is granular and the thickness of the layer (6;43) of paving material is at least equal to the sum of the largest grain size and the diameter of the conduit (44).

11. Method as claimed in any of the claims 5-10, **characterized in that** a cover layer (5) of a paving material is arranged over the layer (6;43) of paving material with the heat exchanger (2) pressed therein.

12. Method as claimed in claim 11, **characterized in that** the paving material (6;43) with the heat exchanger (2) pressed therein is provided with a relatively thin adhesive layer prior to applying of the cover layer (5).

13. Method as claimed in any of the claims 1-4, **characterized in that** the heat exchanger (2) is placed on a subgrade (3) and the layer of paving material (5) is then arranged thereover.

14. Method as claimed in claim 13, **characterized in that** an adhesive layer (11) is applied to the subgrade (3) after placing of the heat exchanger (2).

15. Method as claimed in claim 13 or 14, **characterized in that** prior to the arranging of the layer (5) of paving material at least one travel track (33) is formed on the subgrade (3) with the heat exchanger (2) placed thereon.

16. Method as claimed in any of the foregoing claims, **characterized in that** the or each conduit (44) is embedded in loops (7) into the layer of paving material (6;43).

17. Method as claimed in claim 16, **characterized in that** the loops (7) enclose an acute angle with a longitudinal axis of the pavement.

18. Method as claimed in claim 17, **characterized in that** the loops (7) enclose an angle of a maximum of 85° with the longitudinal axis of the pavement.

19. Installation (1) for generating and storing renewable energy, comprising an energy converting device including a heat exchanger embedded in a layer (6;43) of material of the pavement with at least one conduit (44) for a heat transport medium, and at least one storage location (14) connected thereto via one or more transporting lines, **characterized in that** the storage location (14) is formed by a part of the ground (22) which is separated by walls (16) extending to below the groundwater level (17), at least one heat exchanger (18) is arranged in the separated part of the ground (22) and the transporting line is connected to the heat exchanger (18).

20. Installation (1) as claimed in claim 19, **characterized in that** the heat exchanger (18) is arranged along at least the part of the walls (16) located below the groundwater level (17).

21. Installation (1) as claimed in claim 19 or 20, **characterized in that** an insulating layer (19) is arranged along or in the walls (16).

22. Installation (1) as claimed in claims 19-21, **characterized in that** at least one controllable valve (29) is arranged in the transporting lines between the energy converting device and the storage location (14).

23. Installation (1) as claimed in claim 22, **characterized in that** the valve (29) is a thermostatically controllable valve.

## Patentansprüche

1. Verfahren zum Bilden einer Energieum wandlungsvorrichtung in einer Fahrbahn durch Einbetten wenigstens eines Rohres (44) für einen Wärmetauscher mit einem Wärmeübertragungsmedium an einer gewünschten Stelle in einer Schicht Straßendeckenmaterial (6; 43) und Verbinden des Wärmetauschers (2) mit einer Speicherstelle (14) oder einer Verbrauchsstelle (15),
**dadurch gekennzeichnet,**
**dass** das oder jedes Rohr (44) des Wärmetauschers an einer entfernten Stelle durch Verbinden mit einem Träger in eine gewünschte Form geformt, das so vorgeformte Rohr (44) in das Straßendeckenmaterial (6; 43) eingebettet, und nach dem Einbetten des oder jedes Rohres der Träger davon entfernt wird.

2. Verfahren nach Anspruch 1,
**dadurch gekennzeichnet,**
**dass** der Träger (4) von dem oder jedem Rohr (44) durch Schmelzen von dazwischen angeordneten Verbindungselementen entfernt wird.

3. Verfahren nach Anspruch 1 oder 2,
**dadurch gekennzeichnet,**
**dass** das oder jedes Rohr (44) aus einem elastisch biegsamen Material hergestellt ist.

4. Verfahren nach einem der vorhergehenden Ansprüche,
**dadurch gekennzeichnet,**
**dass** der Träger (4) aus einem armierten Material hergestellt ist.

5. Verfahren nach einem der vorhergehenden Ansprüche,
**dadurch gekennzeichnet,**
**dass** die Schicht Straßendeckenmaterial (6; 43) auf einem Bodenplanum (3) angeordnet und der Wärmetauscher (2) anschließend in das Straßendeckenmaterial eingedrückt wird.

6. Verfahren nach Anspruch 5,
**dadurch gekennzeichnet,**
**dass** der Wärmetauscher (2) beim Eindrücken in das Straßendeckenmaterial (6; 43) von innen unter Druck gehalten wird.

7. Verfahren nach Anspruch 6,
**dadurch gekennzeichnet,**
**dass** beim Eindrücken in das Straßendeckenmaterial (6; 43) durch den Wärmetauscher (2) ein Kühlmedium unter Druck strömt.

8. Verfahren nach einem der Ansprüche 5 bis 7,
**dadurch gekennzeichnet,**
**dass** die Schicht Straßendeckenmaterial (6; 43) relativ offen ist.

9. Verfahren nach Anspruch 8,
**dadurch gekennzeichnet,**
**dass** die Schicht Straßendeckenmaterial (6; 43) wenigstens 5 Volumenprozent offenen Raum aufweist.

10. Verfahren nach einem der Ansprüche 5 bis 9,
**dadurch gekennzeichnet,**
**dass** das Straßendeckenmaterial körnig und die Dicke der Schicht (6; 43) Straßendeckenmaterial zumindest gleich der Summe der größten Korngröße und dem Durchmesser des Rohres (44) ist.

11. Verfahren nach einem der Ansprüche 5 bis 10,
**dadurch gekennzeichnet,**
**dass** eine Deckschicht (5) Straßendeckenmaterial über der Schicht (6; 43) Straßendeckenmaterial mit dem darin eingedrückten Wärmetauscher (2) aufgebracht wird.

12. Verfahren nach Anspruch 11,
**dadurch gekennzeichnet,**
**dass** das Straßendeckenmaterial (6; 43) mit dem darin eingedrückten Wärmetauscher (2) vor dem Aufbringen der Deckschicht (5) mit einer relativ dünnen Haftschicht versehen wird.

13. Verfahren nach einem der Ansprüche 1 bis 4,
**dadurch gekennzeichnet,**
**dass** der Wärmetauscher (2) auf ein Bodenplanum (3) platziert und die Schicht (5) Straßendeckenmaterial dann darüber aufgebracht wird.

14. Verfahren nach Anspruch 13,
**dadurch gekennzeichnet,**
**dass** nach dem Platzieren des Wärmetauschers (2) eine Haftschicht (11) auf das Bodenplanum (3) aufgebracht wird.

15. Verfahren nach Anspruch 13 oder 14,
**dadurch gekennzeichnet,**
**dass** vor dem Aufbringen der Schicht (5) Straßendeckenmaterial wenigstens eine Fahrspur (33) auf dem Bodenplanum (3) mit dem darauf platzierten Wärmetauscher (2) gebildet wird.

16. Verfahren nach einem der vorhergehenden Ansprüche,
**dadurch gekennzeichnet,**
**dass** das oder jedes Rohr (14) in Schleifen (7) in die Schicht (6; 43) Straßendeckenmaterial eingebettet wird.

17. Verfahren nach Anspruch 16,
**dadurch gekennzeichnet,**
**dass** die Schleifen (7) einen spitzen Winkel mit der Längsachse der Fahrbahn einschließen.

18. Verfahren nach Anspruch 17,
**dadurch gekennzeichnet,**
**dass** die Schleifen (7) einen Winkel von maximal 85° mit der Längsachse der Fahrbahn einschließen.

19. Einrichtung (1) zum Erzeugen und Speichern erneuerbarer Energie, mit einer Energieumwandlungsvorrichtung, die einen in einer Schicht (6; 43) Fahrbahnmaterial eingebetteten Wärmetauscher mit wenigstens einem Rohr (44) für ein Wärmeübertragungsmedium enthält, und wenigstens einer damit über eine oder mehrere Transportleitungen verbundenen Speicherstelle (14),
**dadurch gekennzeichnet,**
**dass** die Speicherstelle (14) durch einen Teil des Bodens (22) gebildet wird, der durch Wände (16) abgetrennt ist, welche sich bis unter den Grundwasserspiegel (17) erstrecken, dass wenigstens ein Wärmetauscher (18) in dem abgetrennten Teil des Bodens (22) angeordnet ist und dass die Transportleitung mit dem Wärmetauscher (18) verbunden ist.

20. Einrichtung (1) nach Anspruch 19,
**dadurch gekennzeichnet,**
**dass** der Wärmetauscher (18) entlang wenigstens des Teils der Wände angeordnet ist, die unter dem Grundwasserspiegel (17) liegen.

21. Einrichtung (1) nach Anspruch 19 oder 20,
**dadurch gekennzeichnet,**
**dass** eine Isolierschicht (19) entlang der oder in den Wänden (16) angeordnet ist.

22. Einrichtung (1) nach einem der Ansprüche 19 bis 21,
**dadurch gekennzeichnet,**
**dass** wenigstens ein Regelventil (29) in den Transportleitungen zwischen der Energieumwandlungsvorrichtung und der Speicherstelle (14) angeordnet ist.

23. Einrichtung (1) nach Anspruch 22,
**dadurch gekennzeichnet,**
**dass** das Ventil (29) ein Thermostatventil ist.

## Revendications

1. Procédé pour former un dispositif de transformation d'énergie dans une chaussée, en encastrant dans un emplacement requis dans une couche d'un matériau de pavage (6; 43) au moins une conduite (44) pour un échangeur de chaleur comprenant un fluide caloporteur et reliant l'échangeur de chaleur (2) à un emplacement de stockage (14) ou un emplacement d'utilisation (15) **caractérisé en ce que** la ou chaque conduite (44) de l'échangeur de chaleur est conformée en une forme requise en un emplacement à distance, par fixation sur la conduite ainsi préformée (44) étant encastrée dans le matériau de pavage (6; 43), et le support étant retiré ensuite de la ou de chaque conduite.

2. Procédé selon la revendication 1, **caractérisé en ce que** le support (4) est retiré de la ou de chaque conduite (44) en faisant fondre les éléments de fixation placés entre eux.

3. Procédé selon la revendication 1 ou la revendication 2,
**caractérisé en ce que** la ou chaque conduite (44) est fabriquée à partir d'un matériau élastique et souple.

4. Procédé selon l'une quelconque des revendications précédentes, **caractérisé en ce que** le support (4) est fabriqué à partir d'un matériau de renforcement.

5. Procédé selon l'une quelconque des revendications précédentes, **caractérisé en ce que** la couche de matériau de pavage (6; 43) est placée sur une forme (3) et l'échangeur de chaleur (2) est ensuite comprimé dans le matériau de pavage.

6. Procédé selon la revendication 5, **caractérisé en ce que** l'échangeur de chaleur (2) est maintenu sous pression interne pendant sa compression dans le matériau de pavage (6; 43).

7. Procédé selon la revendication 6, **caractérisé en ce que** un liquide de refroidissement sous pression circule dans l'échangeur de chaleur (2) pendant la compression de ce dernier dans le matériau de pavage (6; 43).

8. Procédé selon l'une quelconque des revendications 5 à 7,
**caractérisé en ce que** la couche de matériau de pavage (6; 43) est relativement ouverte.

9. Procédé selon la revendication 8, **caractérisé en ce que** la couche de matériau de pavage (6; 43) comprend au moins 5 pour cent en volume d'espace ouvert.

10. Procédé selon l'une quelconque des revendications 5 - 9,
**caractérisé en ce que** le matériau de pavage est granulaire et l'épaisseur de la couche (6; 43) du matériau de pavage est au moins égale à la somme de la dimension de grain supérieure et du diamètre de la conduite (44).

11. Procédé selon l'une quelconque des revendications 5 - 10,
**caractérisé en ce que** une couche de couverture (5) d'un matériau de pavage est placée sur la couche (6; 43) de matériau de pavage dans lequel l'échangeur de chaleur (2) est comprimé.

12. Procédé selon la revendication 11, **caractérisé en ce que** le matériau de pavage (6; 43) dans lequel l'échangeur de chaleur (2) est comprimé est pourvu d'une couche adhésive relativement mince avant l'application de la couche de couverture (5).

13. Procédé selon l'une quelconque des revendications 1 - 4,
**caractérisé en ce que** l'échangeur de chaleur (2) est placé sur une forme (3) et cette dernière est recouverte par la couche de matériau de pavage (5).

14. Procédé selon la revendication 13, **caractérisé en ce que** une couche adhésive (11) est appliquée sur la forme (3) une fois l'échangeur de chaleur (2) positionné.

15. Procédé selon la revendication 13 ou la revendication 14,
**caractérisé en ce que** avant de placer la couche (5) de matériau de pavage, au moins une voie de passage (33) est formée sur la forme (3) sur laquelle est positionné l'échangeur de chaleur (2).

16. Procédé selon l'une quelconque des revendications précédentes, **caractérisé en ce que** la ou chaque conduite (44) est encastrée en boucles (7) dans la couche de matériau de pavage (6; 43).

17. Procédé selon la revendication 16, **caractérisé en ce que** les boucles (7) forment un angle aigu avec un axe longitudinal de la chaussée.

18. Procédé selon la revendication 17, **caractérisé en ce que** les boucles (7) forment un angle maximal de 85° avec l'axe longitudinal de la chaussée.

19. Installation (1) pour générer et stocker une énergie renouvelable, comprenant un dispositif de transformation d'énergie comportant un échangeur de chaleur encastré dans une couche (6; 43) de matériau de la chaussée avec au moins une conduite (44) pour transporter le fluide caloporteur vers, au moins, l'emplacement de stockage (14) relié à cette dernière via une ou plusieurs canalisations de transport **caractérisée en ce que** l'emplacement de stockage (14) est formé par une partie du sol (22) qui est séparée par des parois (16) s'étendant jusqu'au dessous du niveau de la nappe phréatique (17), au moins un échangeur de chaleur (18) étant placé dans la partie séparée du sol (22) et la canalisation de transport étant reliée à l'échangeur de chaleur (18).

20. Installation (1) selon la revendication 19, **caractérisée en ce que** l'échangeur de chaleur (18) est placé le long de la partie au moins des parois (16) placées au dessous du niveau de la nappe phréatique (17).

21. Installation (1) selon la revendication 19 ou la revendication 20,
**caractérisée en ce que** une couche isolante (19) est placée dans ou le long des parois (16).

22. Installation (1) selon les revendications 19 - 21, **caractérisée en ce que** au moins une vanne contrôlable (29) est placée dans les canalisations de transport entre le dispositif de transformation d'énergie et l'emplacement de stockage (14).

23. Installation (1) selon la revendication 22, **caractérisée en ce que** la vanne (29) est une vanne à commande thermostatique.
